# EUROPEAN PATENT SPECIFICATION

(11) **EP 0 830 414 B1**
(45) Date of publication and mention of the grant of the patent: **12.09.2001**
(21) Application number: 96915502.7
(22) Date of filing: 03.05.1996
(51) Int. Cl.: C08J 3/03, B01F 15/04

(54) **A PROCESS FOR PREPARING HIGH INTERNAL PHASE RATIO EMULSIONS AND LATEXES DERIVED THEREOF**
VERFAHREN ZUR HERSTELLUNG VON EMULSIONEN MIT HOHEM ANTEIL AN INNERER PHASE UND DARAUS HERGESTELLTE LATICES
PROCEDE DE PREPARATION D'EMULSIONS AYANT UN RAPPORT DE PHASE INTERNE ELEVE ET LATEX DERIVES DE CES EMULSIONS

(30) Priority: 05.06.1995 US 463151; 10.04.1996 US 630187
(43) Date of publication of application: 25.03.1998
(73) Proprietor: THE DOW CHEMICAL COMPANY, Midland, Michigan 48674 (US)
(72) Inventor: PATE, James, E., III, Sanford, MI 48657 (US); LUTENSKE, Nanette, E., Bay City, MI 48706 (US); PETERS, James, Midland, MI 48640 (US); PELLETIER, Ronald, R., Midland, MI 48642 (US)
(74) Representative: Raynor, John
(86) International application number: US9606293
(87) International publication number: WO9639461

(56) References cited:
- EP-A- 0 156 486
- EP-A- 0 283 247
- GB-A- 2 194 166
- US-A- 5 147 134
- US-A- 5 250 576

## Description

This invention relates to a process for preparing high internal phase ratio emulsions and artificial latexes derived therefrom.

In conventional emulsions, the dispersed phase contains spheres having a volume fraction of less than 0.74, which is the volume fraction of the most compact arrangement of spheres of equal radius. However, for high internal phase ratio (HIPR) emulsions, the dispersed phase may have a dispersed phase volume fraction as high as 0.99. The continuous phase in such cases forms a thin liquid film that separates polyhedral cells, and the HIPR emulsion is stabilized by the adsorption of surfactant from the continuous phase on the surface of the cells. These HIPR emulsions are known to be useful as precursors to high molecular weight polymers, composites, and membranes for separation systems. (See Ruckenstein et al., J. Colloid Interface Science, Vol. 133, No. 2, p. 432 (1989).

The preparation of HIPR emulsions by a continuous process is known. For example, in U.S. Patent 4,018,426, Mertz et al. discloses a system for the continuous production of HIPR emulsions wherein two precisely metered immiscible phases (an internal phase and an inverter phase formed of an internal-in-external emulsifier and an external phase) are mixed together in a preselected ratio of internal phase to inverter phase of between 95 to 5 and 75 to 25 weight percent. The system provides a mixing means receiving the separate streams of the internal phase and the inverter phase and distributing loosely the internal phase in stepwise progression into the inverter phase. This stepwise progression is formed by positioning a plate containing a plurality of holes of progressively larger size which serve to distribute the internal phase stepwise in progressively greater total amount into the external phase before the resultant mixture reaches an outlet. Emulsions provided by the system disclosed by Mertz et al. are described as being useful in the pharmaceutical, food, cosmetic, and firefighting industries. It would be an advance in the art to provide a simple means of preparing HIPR emulsions.

The above-cited references do not suggest that HIPR emulsions can be used to prepare artificial latexes. Artificial latexes are conventionally prepared by the steps of: 1) providing a solution of a polymer or copolymer in a volatile organic solvent; 2) emulsifying the solution with water and an aqueous emulsifier; 3) removing the volatile organic solvent from the emulsion; and 4) adjusting the solids content if desired. Preparations of artificial latexes are described in U.S. Patents 3,360,599; 3,503,917; 4,123,403; and 5,037,864.

In the emulsification and water addition step of the preparation of the artificial latex by a phase inversion process, water and emulsifier are typically slowly added to a polymer solution with high shear until a prescribed ratio of water to polymer solution is reached, generally in the range from 1:10 to 4:1. Continuous processes are also known. For example, European Patent Application 0283247 A2 discloses a continuous method for dispersing a hydrophobic substance in water at elevated temperature and pressure to prepare an artificial latex having a particle size of less than 0.5 micron.

There remains a need to prepare monodisperse latexes having submicron particle size, especially in the field of coating applications, where controlled particle size, minimization of creaming, and improved latex stability are desirable.

The present invention is a method of preparing a high internal phase ratio emulsion without phase inversion comprising the steps of:
a) continuously merging into a disperser and in the presence of an emulsifying and a stabilizing amount of a surfactant, a continuous phase liquid stream having a flow rate R₁, and a disperse phase liquid stream having a flow rate R₂; and
b) mixing the merged streams with a sufficient amount of shear, and with R₂:R₁ sufficiently constant, to form the high internal phase ratio emulsion without phase inversion or stepwise distribution of an internal phase into an external phase;
wherein R₂:R₁ is in a range where the polydispersity of the high internal phase ratio emulsion is not greater than 3.

In a further aspect, the invention is a method of preparing a high internal phase ratio emulsion without phase inversion comprising the steps of:
a) continuously merging into a disperser and in the presence of an emulsifying and a stabilizing amount of a surfactant, a continuous phase liquid stream having a flow rate R₁, and a disperse phase liquid stream having a flow rate R₂; and
b) mixing the merged streams at a mixing rate sufficiently constant to form the high internal phase ratio emulsion without phase inversion;
wherein R₂:R₁ encompasses a range, the lower limit of which range being defined by a point where the volume average particle size of the high internal phase ratio emulsion begins to show an inverse dependence on R₂:R₁, and wherein the upper limit of which range is just less than an R₂:R₁ where a phase inversion of the high internal phase ratio emulsion takes place, with the further proviso that the volume average particle size is not greater than 1.9 microns.

Monodisperse submicron particles can be prepared using the process of the present invention.

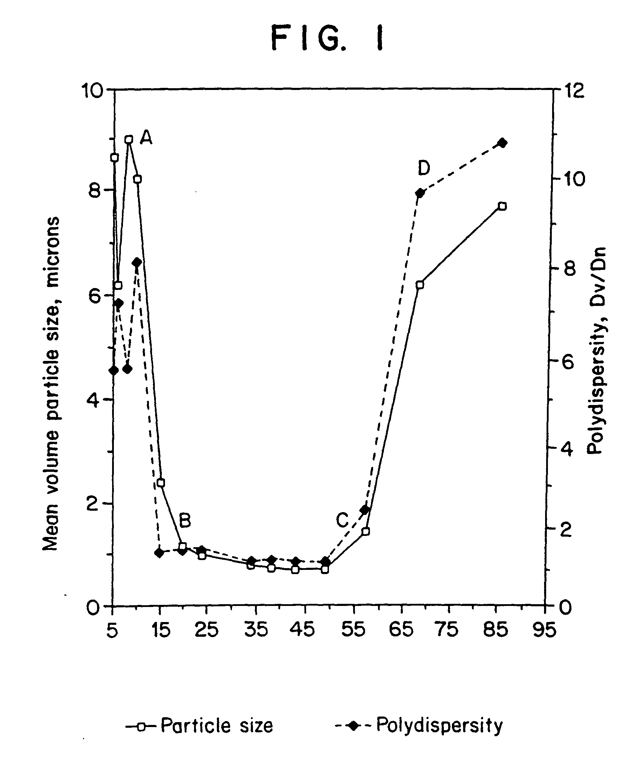

Figure 1 is a profile of the particle size and polydispersity of particles of an HIPR emulsion prepared from the process of the present invention, as a function of the ratio of the rates of the disperse phase to the continuous phase, R₂:R₁, where the continuous phase is water, the disperse phase is ENGAGE'" KC8852 ethylene-octene elastomer (a trademark of The Dow Chemical Company, 24 weight percent in toluene based on the total weight of the copolymer and the solvent), and the surfactant is 4 percent by weight sodium oleate, based on the weight of the elastomer.

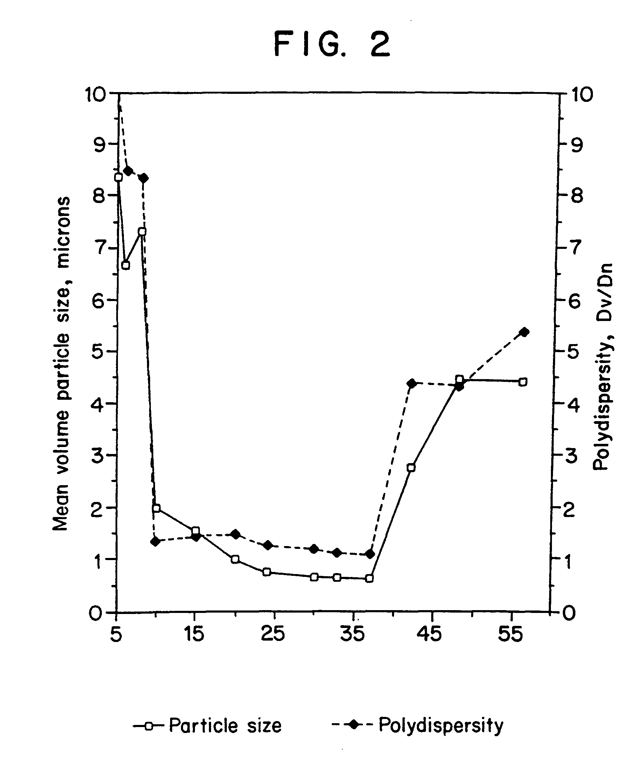

Figure 2 is a profile similar to Figure 1, where the continuous phase is water, the disperse phase is VECTOR'" 4211D SIS (styrene-isoprene-styrene) triblock copolymer (a trademark of Dexco Polymer, 35 weight percent in toluene based on the total weight of polymer and solvent), and the surfactant is 4 percent by weight DRESINATE™ 214 potassium soap of a modified resin (a trademark of Hercules, Inc.), based on the weight of the copolymer.

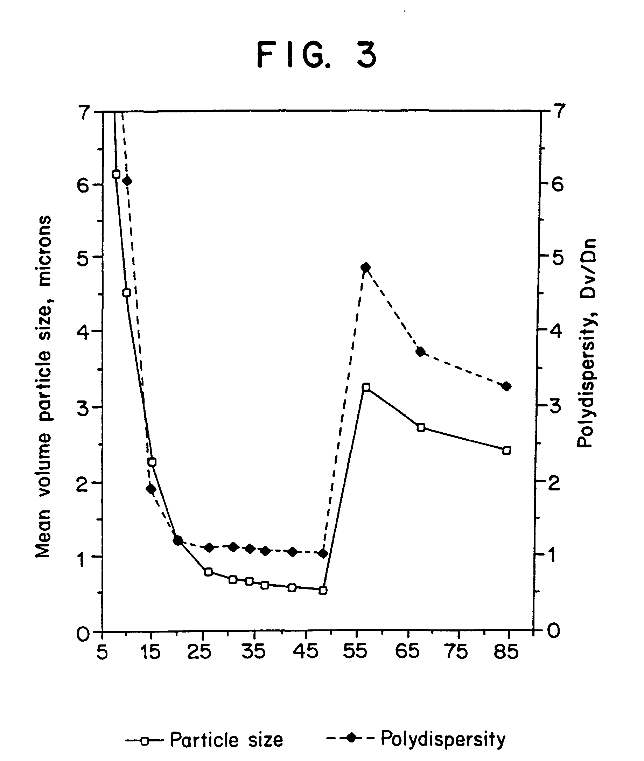

Figure 3 is a profile similar to Figure 1, where the continuous phase is water, the disperse phase is STYRON™ 680 polystyrene (a trademark of The Dow Chemical Company, 40 weight percent in toluene based on the total weight of polymer and solvent) emulsified with 4 percent by weight RHODAPEX™ CO-436 surfactant (a trademark of Rhône-Poulenc), based on the weight of the polystyrene.

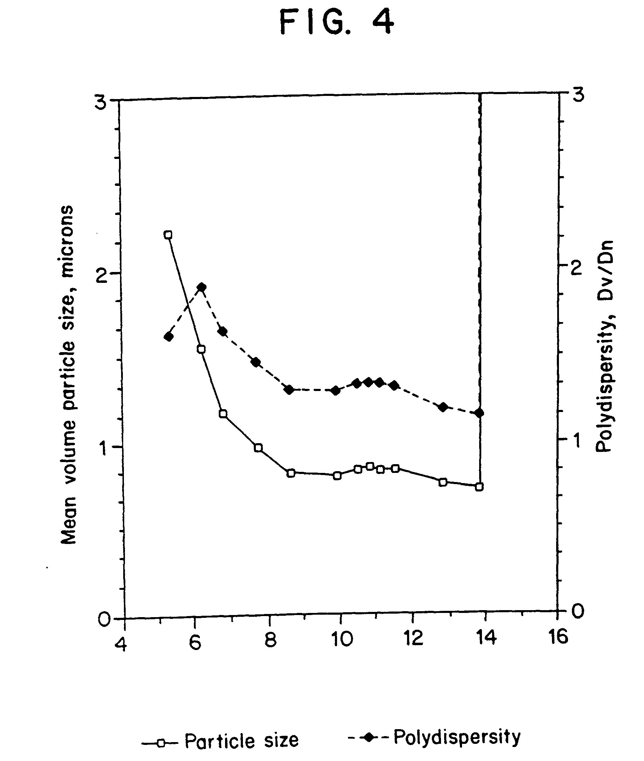

Figure 4 is a profile similar to Figure 1, where the continuous phase is water, the disperse phase is D.E.R.™ 331 epoxy resin (a trademark of The Dow Chemical Company), and the surfactant is 4 percent by weight Rhodapex CO-436 surfactant, based on the weight of the epoxy resin.

The HIPR emulsions of the present invention are prepared by continuously merging into a disperser and in the presence of an emulsifying and a stabilizing amount of a surfactant, a continuous phase liquid stream having a flow rate R₁, and a disperse phase liquid stream having a flow rate R₂; and mixing the merged streams at a mixing rate sufficient to form the HIPR emulsion. For the purposes of this invention, the term "continuous phase liquid stream" is used to denote a flowing liquid that becomes the continuous phase. Similarly, the term "disperse phase liquid stream" is used to denote a flowing liquid that becomes the disperse phase.

The continuous phase and disperse phase liquid streams are sufficiently immiscible with each other to be emulsifiable. In one aspect of the process of the present invention, R₂:R₁ is defined by a range where the polydispersity of the particles of the HIPR emulsion is not greater than 3. For the purposes of this invention, the term "polydispersity" is used to denote the ratio of the volume average diameter and the number average diameter of the particles, or Dᵥ/Dₙ. The term "particles" is used herein to denote particles or droplets.

Referring to Figure 1, point A on the graph represents the point where the volume average particle size of the HIPR emulsion begins to show an inverse dependence on R₂:R₁ until a virtual minimum, represented at point B, is reached. Point A represents the lower limit of R₂:R₁. The region encompassed by points A and B on the graph is where the mean volume average particle size and/or the polydispersity of the particles of the HIPR emulsion decrease with increasing R₂:R₁. At point B, a virtual minimum is reached, and from point B to point C, the particle size and polydispersity are substantially independent of R₂:R₁. This region represents the preferred operating range of R₂:R₁. At an R₂:R₁ greater than the R₂:R₁ at point C, a phase inversion takes place, as manifested by the rapid increase in particle size and polydispersity of the HIPR emulsion in the region from point C to point D. The preferred ratio of the disperse phase to the continuous phase for the example illustrated in Figure 1 is from 10:1, preferably from 15:1, more preferably from 20:1, to 60:1, more preferably to 55:1.

Referring to Figure 2, the preferred ratio of the disperse phase to the continuous phase is from 10:1, more preferably 25:1, to 40:1, more preferably to 35:1.

Referring to Figure 3, the preferred ratio of the disperse phase to the continuous phase is from 15:1, preferably 25:1, to 50:1.

Referring to Figure 4, D.E.R.™ 331 epoxy resin (a trademark of The Dow Chemical Company) is used as the disperse phase in the absence of solvent for the resin. The preferred ratio of the disperse phase to the continuous phase is from 6:1, preferably from 8:1, to 14:1, preferably 13:1.

Surprisingly, HIPR emulsions are formed by the process of the present invention without phase inversion or stepwise distribution of an internal phase into an external phase. This process differs from previously described continuous processes for making HIPR emulsions, which processes are carried out with stepwise distribution resulting in phase inversion.

Preferably, R₂:R₁ is such that the polydispersity is not greater than 2.0, more preferably, not greater than 1.5, even more preferably, not greater than 1.2, and most preferably, not greater than 1.1. The allowable variance of the rates of each stream depends, in part, on the nature of the disperse and continuous phases, and the dispersers used to make the HIPR emulsion. Preferably, this variance is not greater than 10, more preferably not greater than 5, and most preferably not greater than 1 percent. Preferably, the average particle size of the HIPR emulsion is not greater than 2 microns, more preferably, not greater than 1.5 microns, and most preferably, not greater than 1.0 micron.

The preferred ratio, R₂:R₁, depends upon several factors, including the composition of the phases, the type and quantity of the surfactant used to form and stabilize the HIPR emulsion, and the temperature at which the emulsion is formed.

The continuous phase and the disperse phase are liquids that are sufficiently immiscible to form a stable HIPR emulsion in the presence of a sufficient quantity of a surfactant. For the purposes of this specification, the term "liquid" is used to mean a homogeneous solution that can be pumped through a conduit. The liquid may be neat (that is, a liquid at room temperature), molten (that is, a liquid at a temperature above room temperature), or a solid or unpumpable liquid dissolved in a solvent.

Preferably, the continuous phase is aqueous and the disperse phase contains a polymer and optionally a solvent for the polymer. Suitable solvents include, but are not restricted to, toluene, cyclohexane, and methylene chloride. An example of a class of polymer suitable for the practice of the method of the present invention is a triblock copolymer containing a polymer block of an alkenyl aromatic hydrocarbon and a polymer block of a conjugated diene. Triblock copolymers are well known and can be prepared by any suitable means such as described in U.S. Patents 3,135,716; 3,150,209; 3,496,154; 3,498,960, 4,145,298; and 4,169,115.

Examples of alkenyl aromatic hydrocarbons include alkyl-substituted styrenes; more preferred are styrene, α-methylstyrene, and vinyltoiuene, with styrene being most preferred. Preferred conjugated dienes are C₄-C₈ conjugated dienes; more preferred are 1,3-butadiene, isoprene, 2,3-dimethyl-1,3-butadiene, 1,3-pentadiene, and 3-methyl-1,3-pentadiene; 1,3-butadiene and isoprene are most preferred.

Polyolefins such as polypropylene, polyethylene, and copolymers thereof and blends thereof, as well as ethylene-propylene-diene terpolymers, are also useful for the preparation of HIPR emulsions by the method of the present invention. Preferred olefinic polymers include linear high density polyethylene (HDPE); heterogeneously branched linear low density polyethylene (LLDPE) such as DOWLEX™ polyethylene resin (a trademark of The Dow Chemical Company); heterogeneously branched ultra low linear density polyethylene (ULDPE) such as ATTANE™ ULDPE (a trademark of The Dow Chemical Company); homogeneously branched, linear ethylene/α-olefin copolymers such as TAFMER™ (a trademark of Mitsui Petrochemicals Company Limited) and EXACT™ (a trademark of Exxon Chemical Company), which can be prepared as described in U.S. Patent 3,645,922 homogeneously branched, substantially linear ethylene/α-olefin polymers such as AFFINITY™ polyolefin plastomers and ENGAGE™ polyolefin elastomers (trademarks of The Dow Chemical Company) which can be prepared, for example, by a process disclosed in U.S. Patents 5,272,236 and 5,278,272; and high pressure, free radical polymerized ethylene polymers and copolymers such as low density polyethylene (LDPE), ethylene-acrylic acid (EAA) copolymers such as PRIMACOR™ (a trademark of The Dow Chemical Company), and ethylene-vinyl acetate (EVA) copolymers such as ESCORENE'" polymers (a trademark of Exxon Chemical Company), and ELVAX™ (a trademark of E.I. du Pont de Nemours & Co.).

The preferred substantially linear ethylene/α-olefin polymers have a density (measured in accordance with ASTM D-792) of not less than 0.850, more preferably not less than 0.855, and most preferably not less than 0.860 g/cm³ and not more than 0.965, more preferably not more than 0.880, and most preferably not more than 0.875 g/cm³; a weight average molecular weight to number average molecular weight ratio (M_{w}/Mₙ) from 1.5 to 3.0, a measured melt index (measured in accordance with ASTM D-1238 (190/2.16)) of not less than 0.1, more preferably not less than 0.5, and most preferably not less than 1 g/10 minute, to not greater than 500, more preferably not greater than 100, even more preferably not greater than 70, and most preferably not greater than 10 g/10 minute; and an I₁₀/I₂ of 6 to 20, more preferably to 14 (measured in accordance with ASTM D-1238 (190/10)).

Other examples of polymers that are suitable for the practice of the present invention include diblock copolymers of alkenyl aromatic hydrocarbons and conjugated dienes, such as those described herein; epoxy resins, polystyrenes, polyetherimides, polycarbonates, and polyurethanes.

Naphthenic and paraffinic hydrocarbons are also suitable for the practice of the present invention.

HIPR emulsions can even be prepared using the process of the present invention in the absence of polymers. For example, solvents having low water-miscibility such as toluene, methylene chloride, cyclohexane, and petroleum ethers, can form HIPR emulsions with water. Furthermore, monomers such as styrene or acrylate monomers can be used.

The continuous and disperse phases are interchangeable. For example, a water stream and an oil stream merged and mixed together in the presence of a suitable surfactant at a water:oil flow rate ratio of 20:1 may produce an oil-continuous system. On the other hand, a water stream and an oil stream merged and mixed together in the presence of the same or another surfactant, preferably another surfactant, at a water to oil flow rate ratio of 1:20, may produce a water-continuous system. Although the continuous phase or the disperse phase is preferably water-based, and more preferably the continuous phase is water-based, neither phase need be water-based.

The viscosity of the phases is sufficiently low to be pumped through a conduit. Viscosities of the phases may be controlled, for example, by solvent addition or temperature adjustment. For example, a solid or an otherwise unpumpable polymeric disperse phase may be rendered pumpable by dissolving the polymer in a sufficient quantity of a solvent for the polymer. It may also be possible to render pumpable a solid or an otherwise unpumpable liquid by adjusting temperature.

The surfactant used to form the HIPR emulsion may be anionic, cationic, or nonionic, or combinations thereof. Generally, higher surfactant concentrations result in smaller diameter particles, but surfactant concentrations that are too high tend to deleteriously affect the properties of products, such as films, made from the emulsion. The surfactant concentration is sufficient to form an emulsion and subsequently stabilize it, and is preferably in the range of 0.1, more preferably 0.5, and most preferably 2, to 15, more preferably to 6, and most preferably 4 weight percent based on the weight of the disperse phase. The surfactant may be added initially to either the continuous phase or the disperse phase prior to mixing of the two phases, or added separately to the mixing device as a third stream. The surfactant is preferably added initially with the disperse phase prior to mixing of the two phases.

An example of a class of a suitable surfactant is a sulfate of an ethoxylated phenol represented by the formula: X-φ-O-(CH₂-CH₂-O)ₙ-SO₃⁻Z⁺ wherein X is a C₆-C₁₈ linear or branched alkyl group, preferably octyl, nonyl, or lauryl, more preferably octyl or nonyl, most preferably nonyl; φ is phenylene, preferably p-phenylene; n is from 4 to 32, preferably from 4 to 12; and Z is sodium, potassium, or ammonium, preferably ammonium. Many of the preferred and more preferred sulfates of ethoxylated alkylphenols are commercially available, for example, poly(oxy-1,2-ethanediyl) α-sulfo-ω(nonylphenoxy) ammonium salt.

Other suitable classes of surfactants include, but are not restricted to, alkali metal fatty acid salts such as alkali metal oleates and stearates; polyoxyethylene nonionics; alkali metal lauryl sulfates, quaternary ammonium surfactants; alkali metal alkylbenzene sulfonates such as sodium dodecylbenzene sulfonate; and alkali metal soaps of modified resins.

Examples of dispersers suitable for the formation of the HIPR emulsion include, but are not restricted to, a rotating shaft within a sleeve-type disperser, as described by Warner et al. in U.S. Patent 4,123,403; a high-shear stator rotor; an extruder; or a centrifugal pump-head.

### Latexes Prepared from HIPR Emulsions

A latex is prepared from an HIPR emulsion by combining the emulsion with a suitable amount of the liquid which constitutes the continuous phase liquid, or a liquid which is compatible with the continuous phase, but which does not interfere with the integrity of the particles. Where water is the continuous phase, the latex is typically prepared by adding water to the HIPR emulsion. More preferably, the latex is made in a continuous fashion by directing the HIPR emulsion and water through any suitable dilution unit, such as a centrifugal pump-head.

If the disperse phase of the HIPR emulsion is formed by dissolving a solid or viscous liquid in a suitable solvent, it is usually desirable to remove the solvent after the latex is formed. However, if the disperse phase does not contain a solvent, a latex can be formed by simply diluting the HIPR emulsion. In this case, the latex is formed much more efficiently than by conventional methods, because the steps of removing the solvent and readjusting the solids content are unnecessary.

It is also possible to prepare latexes having a multimodal distribution of particles by combining HIPR emulsions (or latexes prepared therefrom) of different mean average particle sizes. Latexes having multimodal distribution of particles are useful particularly when it is desired to increase the solids content of the latex, while maintaining low viscosity.

It is also possible to prepare latexes having a multitude of disperse phases.

It has been found that useful films can be made from latexes derived from the HIPR emulsions prepared by the process of the present invention. For example, a substantially linear olefin polymer as described herein is found to form a film having substantially uniform thickness across a substrate. This film has useful physical properties, such as a high tensile strength, and can be prepared at any temperature suitable for integral film formation, generally in the range from 25°C, more preferably from 50°C, to 150°C, more preferably 100°C.

The latexes derived from the HIPR emulsions prepared by the process of the present invention can be used for applications normally associated with latexes. For example, the latex may be used to coat floors, wood, cars, metals, fabrics, or paper; or applied to a mold to make a glove or a condom. The latex may also be used for adhesives, paints, sealants, caulks, or carpet backing.

The following example is for illustrative purposes only and is not meant to limit the scope of the invention.

### Example 1 - Process for the Preparation of a Water-Continuous Dispersion

The ethylene-octene elastomer profiled in Figure 1 was dissolved in toluene to make a 24 weight percent solution, based on the total weight of polymer and solvent. Sodium oleate (4 weight percent, based on the weight of the elastomer) was then added to the solution. This solution was the disperse phase. The disperse phase was pumped continuously through an arm of a 1.27 cm i.d. stainless steel tube fitted to a T, at a constant rate of 30 g/minute. Concurrently, water (the continuous phase) was pumped through an arm of 0.318 cm stainless steel tubing fitted to the T, at a constant rate ranging from 6.0 g/minute to 0.35 g/minute. The two streams were merged and mixed together under conditions of shear using an IKA UTL 25 TURRAX™ in-line stator rotor mixer connected to the T using 1.27 cm stainless steel tubing, and operated at 7400 rpm. A useful HIPR emulsion was formed in the range where the ratio of disperse phase to continuous phase was 10:1 to 60:1 (that is, where the flow rate of the water was constant in the range of 0.5 g/minute to 3 g/minute). The HIPR emulsion was diluted with water, and the particle size and polydispersity were measured using a Coulter LS 130 light scattering particle size analyzer. The toluene was removed from the resultant latex by rotary evaporation, and particle size and polydispersity were measured again, showing substantially the same results. The solids content was adjusted to 55 percent by the removal of water in vacuo.

## Claims

1. A method of preparing a high internal phase ratio emulsion comprising the steps of:
a) continuously merging into a disperser and in the presence of an emulsifying and a stabilizing amount of a surfactant, a continuous phase liquid stream having a flow rate R1, and a disperse phase liquid stream having a flow rate R2; and
b) mixing the merged streams at a mixing rate sufficiently constant to form the high internal phase ratio emulsion without phase inversion;
wherein R2:R1 encompasses a range, the lower limit of which range being defined by a point where the volume average particle size of the high internal phase ratio emulsion begins to show an inverse dependence on R2:R1 and wherein the upper limit of which range is just less than an R2:R1 where a phase inversion of the high internal phase ratio emulsion takes place, wherein R2:R1 is in a range where the polydispersity of the particles of the high internal phase ratio emulsion is less than 2, and the volume average particle size is not greater than 1.9 micrometer.

2. The method of Claim 1 wherein R2:R1 is in a range where the volume average particle size is not greater than 1 micrometer.

3. The method of Claim 1 or Claim 2 wherein the disperse phase comprises a copolymer of a polymer block of an alkenyl aromatic hydrocarbon and a polymer block of a conjugated diene; an epoxy resin; a poly[ethylene-acrylic acid]; a polystyrene; a polyetherimide; a polycarbonate; a polyolefin; or a polyurethane.

4. The method of Claim 3 wherein the polyolefin comprises a homogeneous random partly crystalline ethylene-α-olefin copolymer having a narrow molecular weight distribution, or a substantially linear ethylene/α-olefin copolymer having a density from 0.850 to 0.965 g/cm3, an Mw/Mn from 1.5 to 3.0, a melt index of 0.1 to 100 g/10 minute, and an I10/I2 of 6 to 20.

5. The method of Claim 4 wherein the ethylene/α-olefin copolymer is an ethylene/1-octene copolymer having a density from 0.855 to 0.875 g/cm³ and a melt index from 0.5 to 70 g/10 minute.

6. The method of Claim 4 or Claim 5 wherein R2:R1 is in the range of 10:1 to 60:1.

7. The method of any one of Claims 4 to 6 wherein R2:R1 is in the range of 20:1 to 55:1.

8. The method of Claim 7 wherein the disperse phase comprises a copolymer of a polymer block of an alkenyl aromatic hydrocarbon.

9. The method of Claim 8 wherein the copolymer of a polymer block of an alkenyl aromatic hydrocarbon comprises a styrene-isoprene-styrene triblock copolymer, and R2:R1 is in the range of 10:1 to 40:1.

10. The method of Claim 9 wherein R2:R1 is in the range of 25:1 to 35:1.

11. The method of Claim 3 wherein the disperse phase comprises an epoxy resin, and R2:R1 is in the range of 6:1 to 14:1.

12. The method of Claim 3 wherein the disperse phase comprises polystyrene, and R2:R1 is in the range of 15:1 to 50:1.

13. The method of any one of Claims 1 to 12 wherein the surfactant comprises a combination of surfactants selected from anionic, cationic, and nonionic surfactants.

14. The method of any one of Claims 1 to 12 wherein the surfactant is an alkali metal fatty acid salt, a polyoxyethylene nonionic, an alkali metal lauryl sulfate, a quaternary ammonium surfactant, an alkali metal alkylbenzene sulfonate, or an alkali metal soap of a modified resin, or a combination thereof.

15. The method of any one of Claims 1 to 14 wherein the continuous phase is aqueous.

16. The method of any one of Claims 1 to 14 wherein the continuous phase is non-aqueous.

17. The method of Claim 15 which further includes after step (b) diluting the high internal phase ratio emulsion with water to form an artificial latex.

18. The use of a latex prepared by a method according to Claim 17 to form a floor coating, a wood coating, an automotive coating, a steel coating, a paper coating, a glove, a carpet backing, an adhesive, a sealant, a caulk, or a condom, by application of the latex to a substrate or a mould.

## Patentansprüche

1. Verfahren zur Herstellung einer Emulsion mit hohem Verhältnis an innerer Phase, umfassend die Stufen von:
a) kontinuierliches Zusammenströmen in einen Disperser und in Anwesenheit einer emulgierenden und einer stabilisierenden Menge eines Tensids einer Flüssigkeitsströmung mit kontinuierlicher Phase, die eine Strömungsgeschwindigkeit R₁ hat, und einer Flüssigkeitsströmung mit disperser Phase, die eine Strömungsgeschwindigkeit R₂ hat; und
b) Mischen der zusammengeströmten Strömungen bei einer ausreichend konstanten Mischrate zur Bildung der Emulsion mit hohem Verhältnis an innerer Phase ohne Phasenumkehr;
bei welchem R₂:R₁ einen Bereich umfaßt, wobei die untere Grenze dieses Bereiches durch einen Punkt definiert ist, wo die Volumendurchschnittsteilchengröße der Emulsion mit hohem Verhältnis an innerer Phase eine umgekehrte Abhängigkeit von R₂:R₁ zu zeigen beginnt, und wobei die obere Grenze dieses Bereiches gerade weniger als ein R₂:R₁ ist, bei welchem eine Phaseninversion der Emulsion mit hohem Verhältnis an innerer Phase erfolgt, bei welchem R₂:R₁ in einem Bereich liegt, in welchem die Polydispersität der Teilchen der Emulsion mit hohem Verhältnis an innerer Phase weniger als 2 ist und die mittlere Volumendurchschnittsteilchengröße nicht größer als 1,9 Mikrometer ist.

2. Verfahren nach Anspruch 1, bei welchem R₂:R₁ in einem Bereich liegt, wo die mittlere Volumendurchschnittsteilchengröße nicht größer als 1 Mikrometer ist.

3. Verfahren nach Anspruch 1 oder Anspruch 2, bei welchem die disperse Phase ein Copolymeres von einem Polymerblock eines alkenylaromatischen Kohlenwasserstoffs und einen Polymerblock eines konjugierten Diens; ein Epoxyharz; eine Poly[ethylen-acryl-säure]; ein Polystyrol; ein Polyetherimid, ein Polykarbonat; ein Polyolefin oder ein Polyurethan umfaßt.

4. Verfahren nach Anspruch 3, bei welchem das Polyolefin ein homogenes statistisches teilweise kristallines Ethylen-α-Olefincopolymeres, das eine schmale Molekulargewichtsverteilung hat, oder ein im wesentlichen lineares Ethylen/α-Olefincopolymeres, das eine Dichte von 0,850 bis 0,965 g/cm³, ein Mw/Mn von 1,5 bis 3,0, einen Schmelzindex von 0,1 bis 100 g/10 min und ein I10/I2 von 6 bis 20 hat, umfaßt.

5. Verfahren nach Anspruch 4, bei welchem das Ethylen/α-Olefincopolymere ein Ethylen/1-Octencopolymeres, das eine Dichte von 0,855 bis 0,875 g/ cm³ und einen Schmelzindex von 0,5 bis 70 g/10 min hat, ist.

6. Verfahren nach Anspruch 4 oder Anspruch 5, bei welchem R₂:R₁ in dem Bereich von 10:1 bis 60:1 liegt.

7. Verfahren nach einem der Ansprüche 4 bis 6, bei welchem R₂:R₁ in dem Bereich von 20:1 55:1 liegt.

8. Verfahren nach Anspruch 7, bei welchem die disperse Phase ein Copolymeres eines Polymerblockes eines alkenylaromatischen Kohlenwasserstoffs umfaßt.

9. Verfahren nach Anspruch 8, bei welchem das Copolymere eines Polymerblocks eines alkenylaromatischen Kohlenwasserstoffs ein Styrol-Isopren-Styrol-triblockcopolymeres umfaßt und R₂:R₁ in dem Bereich von 10:1 bis 40:1 liegt.

10. Verfahren nach Anspruch 9, bei welchem R₂:R₁ in dem Bereich von 25:1 bis 35:1 liegt.

11. Verfahren nach Anspruch 3, bei welchem die disperse Phase ein Epoxyharz umfaßt und R₂:R₁ in dem Bereich von 6:1 bis 14:1 liegt.

12. Verfahren nach Anspruch 3, bei welchem die disperse Phase Polystyrol umfaßt und R₂:R₁ in dem Bereich von 15:1 bis 50:1 liegt.

13. Verfahren nach einem der Ansprüche 1 bis 12, bei welchem das Tensid eine Kombination von Tensiden, ausgewählt aus anionischen, kathionischen und nichtionischen Tensiden, umfaßt.

14. Verfahren nach einem der Ansprüche 1 bis 12, bei welchem das Tensid ein Alkalimetallfettsäuresalz, ein Polyoxyethylen-Nonionic, ein Alkalimetalllaurylsulfat, ein quaternäres Ammoniumtensid, ein Alkalimetallalkylbenzolsulfonat oder eine Alkalimetallseife eines modifizierten Harzes oder eine Kombination hiervon ist.

15. Verfahren nach einem der Ansprüche 1 bis 14, bei welchem die kontinuierliche Phase wässrig ist.

16. Verfahren nach einem der Ansprüche 1 bis 14, bei welchem die kontinuierliche Phase nicht-wässrig ist.

17. Verfahren nach Anspruch 15, welches weiter nach Stufe (b) das Verdünnen der Emulsion mit hohem Verhältnis an innerer Phase mit Wasser zur Bildung eines künstlichen Latex umfaßt.

18. Verwendung eines Latex, der nach dem Verfahren von Anspruch 17 hergestellt ist, zur Bildung eines Bodenüberzuges, eines Holzüberzuges, eines Kraftfahrzeugüberzuges, eines Stahlüberzuges, eines Papierstreichüberzuges, eines Handschuhs, einer Teppichrückseite, eines Klebstoffs, einer Versiegelung, einer Naht oder eines Kondoms durch Auftrag des Latex auf ein Substrat oder eine Form.

## Revendications

1. Procédé de préparation d'une émulsion à teneur élevée en phase interne, qui comprend les étapes consistant à :
a) fusionner de manière continue, dans un dispositif disperseur et en présence d'un émulsifiant et d'une quantité stabilisante d'un tensioactif, un courant liquide de phase continue ayant un débit R1 et un courant liquide de phase dispersée ayant un débit R2, et
b) mélanger les courants fusionnés à une vitesse de mélange suffisamment constante pour former l'émulsion à teneur élevée en phase interne sans inversion de phase,
procédé dans lequel le rapport R2:R1 embrasse un domaine dont la limite inférieure est définie par le point où la taille moyenne de particule en volume de l'émulsion à teneur élevée en phase interne commence à varier de manière inverse en fonction du rapport R2:R1, et dont la limite supérieure est juste inférieure à la valeur du rapport R2:R1 pour laquelle se produit une inversion de phase de l'émulsion à teneur élevée en phase interne, le rapport R2:R1 étant compris dans un domaine où la polydispersion des particules de l'émulsion à teneur élevée en phase interne est inférieure à 2 et la taille moyenne de particule en volume moyen n'est pas supérieure à 1,9 micromètre.

2. Procédé selon la revendication 1, dans lequel le rapport R2:R1 est compris dans un domaine où la taille moyenne de particules en volume moyen n'est pas supérieure à 1 micromètre.

3. Procédé selon la revendication 1 ou 2, dans lequel la phase dispersée comprend un copolymère constitué d'un bloc polymère d'un hydrocarbure alcénylaromatique et d'un bloc polymère d'un diène conjugué, une résine époxy, un poly [éthylène-acide acrylique], un polystyrène, un polyétherimide, un polycarbonate, une polyoléfine ou un polyuréthane.

4. Procédé selon la revendication 3, dans lequel la polyoléfine comprend un copolymère statistique homogène, partiellement cristallin, d'éthylène et d'α-oléfine, ayant une distribution étroite de masse moléculaire, ou un copolymère pratiquement linéaire d'éthylène et d'α-oléfine, ayant une masse volumique de 0,850 à 0,965 g/cm³, un rapport Mp/Mn de 1,5 à 3,0, un indice de fluidité à l'état fondu de 0,1 à 100 g/10 minutes et un rapport I10/I2 de 6 à 20.

5. Procédé selon la revendication 4, dans lequel 1e copolymère d'éthylène et d'α-oléfine est un copolymère d'éthylène et de 1-octène, ayant une masse volumique de 0,855 à 0,875 g/cm3 et un indice de fluidité à l'état fondu de 0,5 à 70 g/10 minutes.

6. Procédé selon la revendication 4 ou 5, dans lequel le rapport R2:R1 est compris dans le domaine allant de 10:1 à 60:1.

7. Procédé selon l'une quelconque des revendications 4 à 6, dans lequel le rapport R2:R1 est compris dans le domaine allant de 20:1 à 55:1.

8. Procédé selon la revendication 7, dans lequel la phase dispersée comprend un copolymère contenant un bloc polymère d'un hydrocarbure alcénylaromatique.

9. Procédé selon la revendication 8, dans lequel le copolymère contenant un bloc polymère d'un hydrocarbure alcénylaromatique comprend un copolymère à trois blocs styrène-isoprène-styrène, et le rapport R2:R1 est compris dans le domaine allant de 10:1 à 40:1.

10. Procédé selon la revendication 9, dans lequel le rapport R2:R1 est compris dans le domaine allant de 25:1 à 35:1.

11. Procédé selon la revendication 3, dans lequel la phase dispersée comprend une résine époxy et le rapport R2:R1 est compris dans le domaine allant de 6:1 à 14:1.

12. Procédé selon la revendication 3, dans lequel la phase dispersée comprend un polystyrène et le rapport R2:R1 est compris dans le domaine allant de 15:1 à 50:1.

13. Procédé selon l'une quelconque des revendications 1 à 12, dans lequel le tensioactif comprend une combinaison de tensioactifs choisis parmi des tensioactifs anioniques, des tensioactifs cationiques et des tensioactifs non-ioniques.

14. Procédé selon l'une quelconque des revendications 1 à 12, dans lequel le tensioactif est un sel de métal alcalin d'acide gras, un tensioactif non-ionique de type polyoxyéthylène, un laurylsulfate de métal alcalin, un tensioactif de type ammonium quaternaire, un alkylbenzènesulfonate de métal alcalin, un savon de métal alcalin d'une résine modifiée, ou une combinaison des tensioactifs précédents.

15. Procédé selon l'une quelconque des revendications 1 à 14, dans lequel la phase continue est une phase aqueuse.

16. Procédé selon l'une quelconque des revendications 1 à 14, dans lequel la phase continue est une phase non-aqueuse.

17. Procédé selon la revendication 15, qui comprend en outre, après l'étape (b), la dilution avec de l'eau de l'émulsion à teneur élevée en phase interne pour former un latex artificiel.

18. Utilisation d'un latex préparé par un procédé selon la revendication 17, pour former, par application du latex sur un support ou un moule, un revêtement de plancher, un revêtement pour le bois, un revêtement pour automobile, un revêtement pour l'acier, un revêtement pour le papier, un gant, un renforcement de tapis, un adhésif, un produit de scellement étanche, un produit de matage ou un préservatif.
